# EUROPÄISCHE PATENTSCHRIFT

(11) **EP 1 059 220 B1**
(45) Veröffentlichungstag und Bekanntmachung des Hinweises auf die Patenterteilung: **07.12.2005**
(21) Anmeldenummer: 00111468.5
(22) Anmeldetag: 27.05.2000
(51) Int. Cl.: B62D 25/08

(54) **Rohbaukarosserie eines Kraftfahrzeugs**
Self-supporting shell structure for a motor vehicle
Structure de carrosserie autoporteuse d'un véhicule automobile

(30) Priorität: 10.06.1999 DE 19926352
(43) Veröffentlichungstag der Anmeldung: 13.12.2000
(73) Patentinhaber: DaimlerChrysler AG, 70567 Stuttgart (DE)
(72) Erfinder: Benz, Eberhard, 71116 Gärtringen (DE); Schnitzer, Andreas, 72411 Bodelshausen (DE)

(56) Entgegenhaltungen:
- DE-A- 19 644 236
- FR-A- 2 345 336
- US-A- 4 560 198
- US-A- 5 201 566
- US-A- 5 303 973
- US-A- 5 466 035

## Beschreibung

Die Erfindung betrifft eine Rohbaukarosserie eines Kraftfahrzeugs mit einer Vorbaustruktur, die untere Vorbaulängsträger sowie obere Längsträger aufweist, an die jeweils eine Federbeinkonsole anschließt und die in seitliche A-Säulen münden, die nach unten mit seitlichen Längsschwellern der Fahrgastzelle verbunden sind.

Eine solche Rohbaukarosserie ist bei Mercedes-Benz-Personenkraftwagen allgemein bekannt. Die Rohbaukarosserie weist eine Vorbaustruktur auf, in der ein Antriebsaggregat sowie weitere Funktionsaggregate untergebracht sind. Die Vorbaustruktur ist mit einer unteren sowie mit einer oberen Längsträgerebene versehen. Die beiden unteren Vorbaulängsträger gehen im Bereich der Fahrgastzelle in seitliche Längsschweller über, in die mehrere Tragsäulen der Fahrgastzelle, insbesondere A- und B-Säulen, münden. Die oberen Längsträger tragen in einem Frontbereich eine Kühlerbrücke. Mit den oberen Längsträgern sind Federbeinkonsolen verbunden, die sich integriert in Radeinbauten bis zu den unteren Längsträgern fortsetzen.

Beispielsweise ist aus der gattungsbildenden deutschen Offenlegungsschrift DE 196 44 236 A1 eine Rohbaukarosserie eines Kraftfahrzeugs mit einer Vorbaustruktur bekannt, die untere Vorbaulängsträger sowie obere Längsträger aufweist, wobei an die oberen Längsträger jeweils eine Federbeinkonsole angeschlossen ist. Die oberen Längsträger münden jeweils in seitliche A-Säulen. Die seitlichen A-Säulen sind nach unten mit seitlichen Längsschwellern der Fahrgastzelle verbunden.
Aus der US-Patentschrift 5,303,973 ist eine Rohbaukarosserie bekannt, bei der ein oberer Längsträger gabelförmig aufgespalten ist. Die Gabelarme des Längsträgers sind kastenprofilförmig aufgebaut und beide direkt mit der A-Säule verbunden. Ein in Vorwärtsfahrtrichtung vorderer Abschnitt des oberen Längsträgers und der sich nach unten zur A-Säule hin erstreckende Gabelarm des oberen Längsträgers sind einstückig ausgebildet. Der obere Gabelarm des oberen Längsträgers, der in Fortsetzung des vorderen Abschnitts im wesentlichen horizontal verläuft, ist als separates Teil angefügt. Der untere Gabelarm des oberen Längsträgers ist etwa auf halber Höhe der A-Säule mit dieser verbunden.

Aus der US-Patentschrift 5,201,566 ist eine Rohbaukarosserie eines Kraftfahrzeugs bekannt, bei der ein unterhalb der Türe verlaufender Längsschweller im Bereich vor einer A-Säule zunächst nach vorne oben und etwa auf Brüstungshöhe dann nach innen gezogen ist. Ein oberer Längsträger ist aus zwei Abschnitten aufgebaut, zum einen ein Abschnitt, der den nach oben gezogenen Längsschweller etwa auf Brüstungshöhe mit der A-Säule verbindet und ein zweiter, vorderer Abschnitt, der sich von dem nach oben gezogenen Längsschweller nach vorne, zur Fahrzeugfront, erstreckt. Zwischen dem schräg nach vorne oben gezogenen Längsschweller und der A-Säule sind neben dem oberen Längsträgerabschnitt zusätzlich zwei weitere, etwa horizontal verlaufende Verstrebungen vorgesehen, die jeweils direkt mit der A-Säule verbunden sind.

Es ist auch bekannt, bei einer Rohbaukarosserie eines Kraftfahrzeugs gemäß der DE 197 09 347 C1 oder der DE 197 09 349 A1 einen strebenartig gestalteten Radhausträger vorzusehen. Dieser erstreckt sich von dem zugeordneten unteren Vorbaulängsträger aus schräg nach hinten und nach oben zu einem Tragsäulen- und Stirnwandbereich.

Aufgabe der Erfindung ist es, eine Rohbaukarosserie der eingangs genannten Art zu schaffen, die eine verbesserte Energieabsorption bei einem Frontalaufprall ermöglicht.
Diese Aufgabe wird dadurch gelöst, daß auf beiden Fahrzeugseiten jeweils eine Verbundstrebenanordnung vorgesehen ist, die sich zwischen dem oberen Längsträger und dem zugeordneten seitlichen Längsschweller und/oder der zugeordneten A-Säule schräg nach unten - in Fahrzeughochrichtung - sowie nach hinten - in Fahrzeuglängsrichtung - erstreckt, wobei jede Verbundstrebenanordnung jeweils durch ein einstückiges Blechprofil gebildet ist, das mit Hilfe von Verbindungsflanschen an den oberen Längsträger einerseits und den Verbindungsbereich zwischen A-Säule und Längsschweller andererseits angefügt ist. Durch die erfindungsgemäße Lösung wird bei Frontalaufprallbelastungen ein zusätzlicher Kraftpfad über die jeweilige Verbundstrebenanordnung geschaffen, wodurch in die oberen Längsträger oder die Federbeinkonsole eingeleitete Aufprallbelastungen nicht ausschließlich im Brüstungsbereich in die A-Säule, sondern zusätzlich noch nach unten in den jeweiligen Längsschweller oder einen A-Säulenfuß weitergeleitet werden. Durch die zusätzliche Verbundstrebenanordnung wird für die oberen Längsträger auch eine zusätzliche Versteifung geschaffen, die ein Ausknicken der oberen Längsträger bei einem entsprechenden Frontalaufprall verhindert. Die Verbundstrebenanordnung blockiert zudem eine Bewegung des Vorderrades zur Stirnwand der Fahrgastzelle hin, wodurch wirkungsvoll Intrusionen der Stirnwand aufgrund des verschobenen Vorderrades verhindert werden können. Insgesamt gesehen wird durch die Verbundstrebenanordnungen eine verbesserte Kraftaufteilung bei entsprechenden Frontalaufprallbelastungen im Bereich der Fahrgastzelle erzielt. Durch die erfindungsgemäße Lösung ergibt sich ein zusätzlicher Kraftpfad, insbesondere für Kräfte, die in die Dämpferbeinkonsole eingeleitet werden. Ein Kraftpfad geht über die Dämpferbeinkonsole in den unteren Vorbaulängsträger, der zweite Kraftpfad geht über die obere Längsträgerebene in die A-Säule. Der dritte, zusätzliche Kraftpfad verläuft über die Verbundstrebenanordnung in den seitlichen Längsschweller. Somit ergibt sich ein optimaler Kraftfluß über ein Dreibein. Zudem wird die betriebsfestigkeitseitig äußerst kritische Anbindung der oberen Längsträgerebene an die A-Säule durch die zusätzlich über die Verbundstrebenanordnung ableitbaren Kräfte in Fahrzeughochrichtung nach unten deutlich entlastet. Im Bereich der Verbindungsflansche wird vorzugsweise eine Verschweißung vorgenommen, so daß sich äußerst stabile Anbindungsbereiche ergeben. Die Verbundstrebenanordnung ist somit kraftübertragend in die Vorbaustruktur eingebunden.

In Ausgestaltung der Erfindung endet die Verbundstrebenanordnung in ihrem unteren Endbereich an einer Vorderseite des Verbindungsbereiches zwischen A-Säule und Längsschweller. Dadurch wird vorteilhaft eine Krafteinleitung am Knotenpunkt zwischen A-Säule und Längsschweller erzielt. In diesem Bereich weist die Fahrgastzelle eine besonders hohe Steifigkeit auf, so daß auch hohe Kräfte über die Verbundstrebenanordnung aufgenommen werden können.

Weitere Vorteile und Merkmale der Erfindung ergeben sich aus den Ansprüchen. Nachfolgend sind bevorzugte Ausführungsbeispiele der Erfindung beschrieben und anhand der Zeichnungen dargestellt.
- Fig. 1: zeigt in perspektivischer Darstellung eine - in Fahrtrichtung gesehen - linke Hälfte eines vorderen Teiles einer Ausführungsform einer erfindungsgemäßen Rohbaukarosserie, bei der eine Anbindung einer Vorbaustruktur an eine Fahrgastzelle dargestellt ist,
- Fig. 2: in einer Seitenansicht eine weitere Ausführungsform eines Teiles einer erfindungsgemäßen Rohbaukarosserie ähnlich Fig. 1 und
- Fig. 3: einen Querschnitt durch ein Verbundstrebenprofil der Vorbaustruktur nach Fig. 2 entlang der Schnittlinie III-III in Fig. 2.

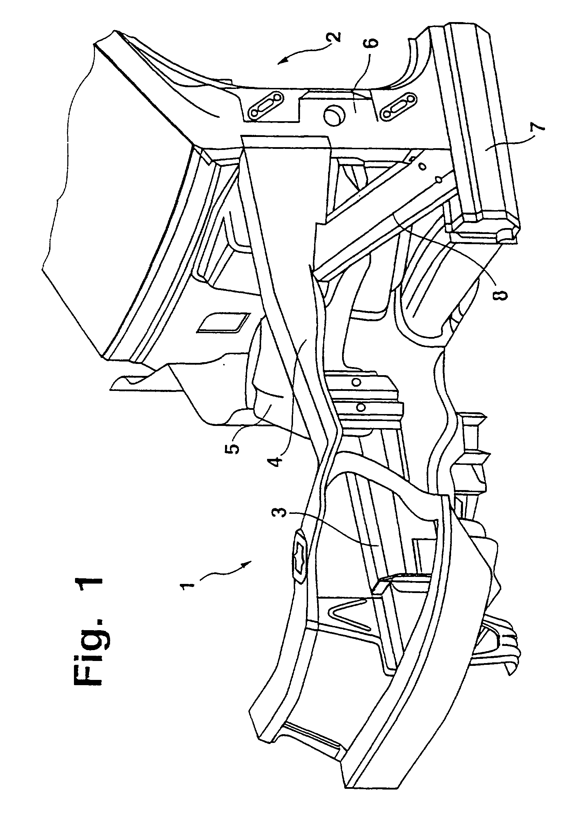

Eine Rohbaukarosserie für einen Personenkraftwagen weist gemäß Fig. 1 eine Vorbaustruktur 1 auf, die in Fahrzeuglängsrichtung nach hinten an eine Fahrgastzelle 2 anschließt. Die Vorbaustruktur 1 ist in grundsätzlich bekannter Weise mit zwei unteren Vorbaulängsträgern 3 versehen, von denen in Fig. 1 lediglich ein - in Fahrtrichtung gesehen - linker Vorbaulängsträger 3 dargestellt ist. Außerdem weist die Vorbaustruktur 1 auf beiden Fahrzeugseiten jeweils einen oberen Längsträger 4 auf, an den eine Federbeinkonsole 5 sowie ein nicht näher dargestellter Radeinbau anschließen. Der Radeinbau ist in seinem unteren Bereich mit dem zugehörigen unteren Vorbaulängsträger 3 verbunden.

Die beiden oberen Längsträger 4 schließen - in Fahrzeuglängsrichtung - in ihrem hinteren Endbereich an jeweils eine, als Tragsäule dienende A-Säule 6 an, die Teil der Fahrgastzelle 2 ist. Zwischen den A-Säulen 6 erstreckt sich in grundsätzlich bekannter Weise eine Stirnwand. Beide A-Säulen sind in ihrem Fußbereich mit einem seitlichen Längsschweller 7 der Fahrgastzelle 2 verbunden, der - in Fahrzeuglängsrichtung gesehen - nach vorne an einer Rückseite des zugehörigen Radeinbaus endet.

In Fig. 1 ist - in normaler Fahrtrichtung gesehen - eine linke Hälfte der Vorbaustruktur 1 sowie des vorderen Abschnittes der Fahrgastzelle 2 dargestellt. Die korrespondierende rechte Hälfte ist entsprechend spiegelsymmetrisch gestaltet. Die unteren Vorbaulängsträger 3 liegen gegenüber den oberen Längsträgern 4 zur Fahrzeugmitte hin versetzt weiter innen.

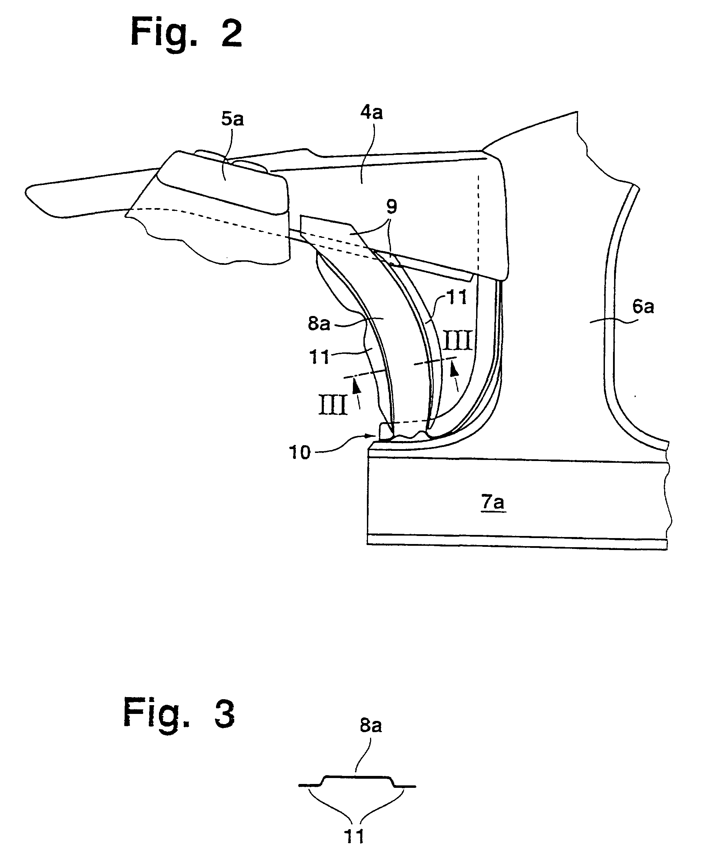

Um eine zusätzliche Abstützung jedes oberen Längsträgers 4 sowie einen zusätzlichen Kraftpfad bezüglich der Aufnahme von Frontalaufprallbelastungen zu schaffen, erstreckt sich zwischen einem Untergurt jedes oberen Längsträgers 4 und dem unten liegenden Längsschweller 7 eine Verbundstrebenanordnung in Form eines einstückigen Verbundstrebenprofiles 8, das vom oberen Längsträger 4 ausgehend in Fahrzeuglängsrichtung nach hinten sowie in Fahrzeughochrichtung nach unten verläuft, so daß ein schräger Verlauf geschaffen ist. Das Verbundstrebenprofil 8 ist im wesentlichen geradlinig ausgeführt, so daß eine schräge, geradlinige Verbindung zwischen dem oberen Längsträger 4 und dem Längsschweller 7 geschaffen wird. Beim Ausführungsbeispiel nach Fig. 1 endet das Verbundstrebenprofil 8 mit seinem unteren Endbereich im vorderen Eckbereich des Verbindungsknotens zwischen der A-Säule 6 und dem Längsschweller 7 und damit im Mündungsbereich des Fußbereiches der A-Säule 6 in den Längsschweller 7. Das Verbundstrebenprofil 8 weist ein im Querschnitt U-artiges Schalenprofil auf, das zur Fahrzeugmitte hin offen ist. Es weist zur Verstärkung seitliche Längsflansche auf, die in den gegenüberliegenden Stirnbereichen des Verbundstrebenprofiles 8 als Verbindungsflansche gestaltet sind und mit zugeordneten Verbindungsstellen des oberen Längsträgers 4 einerseits und des Längsschwellers 7 bzw. der A-Säule 6 andererseits verschweißt sind. Die Profildarstellung in Fig. 3 entspricht in etwa dem Profilquerschnitt des Verbundstrebenprofiles 8. Anstelle eines offenen Verbundstrebenprofiles 8 kann in gleicher Weise auch ein geschlossenes Hohlprofil vorgesehen sein. Grundsätzlich kann die Verbundstrebenanordnung auch aus wenigstens einem Vollprofil bestehen, wobei Hohlprofile diesen gegenüber Gewichtsvorteile haben.

Beim Ausführungsbeispiel nach den Figuren 2 und 3 ist ein in normaler Fahrtrichtung rechter Seitenbereich einer Rohbaukarosserie eines Personenkraftwagens dargestellt, die im wesentlichen der zuvor beschriebenen Rohbaukarosserie gemäß Fig. 1 entspricht. Bau- und funktionsgleiche Teile der Rohbaukarosserie sind daher mit den gleichen Bezugszeichen unter Hinzufügung des Buchstabens a versehen. Einziger Unterschied bei der Rohbaukarosserie nach Fig. 2 ist es, daß das Verbundstrebenprofil 8a eine Krümmung aufweist, wodurch es nicht im Knotenbereich zwischen A-Säule 6a und Längsschweller 7a, sondern vor der A-Säule 6a auf dem Längsschweller 7a mündet. Das Verbindungsstrebenprofil 8a weist einen Fußabschnitt 10 auf, der für eine flächige Anbindung im Bereich entsprechender Profilierungen der Oberseite des Längsschwellers 7a ausgebildet ist, um entsprechende Verschweißungen erzielen zu können. Außerdem weist das Verbundstrebenprofil 8a obere Verbindungsflansche 9 auf, mit denen die feste Verbindung an einer Unterseite des oberen Längsträgers 4a ebenfalls durch Verschweißung erzielt wird. Auch das Verbundstrebenprofil 8a ist im Querschnitt U-artig gestaltet (Fig. 3) und zur Fahrzeugmitte hin offen.

## Patentansprüche

1. Rohbaukarosserie eines Kraftfahrzeugs mit einer Vorbaustruktur, die untere Vorbaulängsträger sowie obere Längsträger aufweist, an die jeweils eine Federbeinkonsole anschließt und die in seitliche A-Säulen münden, die nach unten mit seitlichen Längsschwellern der Fahrgastzelle verbunden sind,
**dadurch gekennzeichnet, daß**
auf beiden Fahrzeugseiten jeweils eine Verbundstrebenanordnung (8, 8a) vorgesehen ist, die sich zwischen dem oberen Längsträger (4, 4a) und dem zugeordneten seitlichen Längsschweller (7, 7a) und/oder der zugeordneten A-Säule (6, 6a) schräg nach unten - in Fahrzeughochrichtung - sowie nach hinten - in Fahrzeuglängsrichtung - erstreckt, wobei jede Verbundstrebenanordnung (8, 8a) jeweils durch ein einstückiges Blechprofil gebildet ist, das mit Hilfe von Verbindungsflanschen (9, 10) an den oberen Längsträger (4a) einerseits und den Verbindungsbereich zwischen A-Säule (6a) und Längsschweller (7a) andererseits angefügt ist.

2. Rohbaukarosserie nach Anspruch 1,
**dadurch gekennzeichnet, daß**
die Verbundstrebenanordnung (8, 8a) in ihrem unteren Endbereich an einer Vorderseite eines Verbindungsbereiches zwischen A-Säule (6, 6a) und Längsschweller (7, 7a) endet.

3. Robaukarosserie nach Anspruch 1 oder 2,
**dadurch gekennzeichnet, daß**
das Blechprofil einen U-artigen Querschnitt aufweist.

## Claims

1. Shell structure of a vehicle body with a front-end structure comprising bottom front-end longitudinal members and top longitudinal members, each adjoined by a strut bracket and opening into lateral A-pillars which are joined at the bottom to side longitudinal sills of the passenger compartment,
**characterised in that**
a composite strut arrangement (8, 8a) is disposed respectively on both vehicle sides, which extends at an angle downwards - in the vehicle vertical direction - and rearwards - in the vehicle longitudinal direction between the top longitudinal members (4, 4a) and the associated side longitudinal sills (7, 7a) and/or associated A-pillars (6, 6a), each composite strut arrangement (8, 8a) being formed respectively by means of an integral sheet metal section which is joined by means of connecting flanges (9, 10) to the top longitudinal members (4a) on the one hand and to the connecting region between the A-pillar (6a) and longitudinal sill (7a) on the other hand.

2. Shell structure as claimed in claim 1,
**characterised in that**
the composite strut arrangement (8, 8a) terminates at its bottom end region on a front face of a connecting region between the A-pillar (6, 6a) and longitudinal sill (7, 7a).

3. Shell structure as claimed in claim 1 or 2,
**characterised in that**
the sheet metal section has a U-shaped cross-section.

## Revendications

1. Carrosserie brute d'un véhicule automobile comprenant une structure d'avant-corps qui présente des longerons d'avant-corps inférieurs ainsi que des longerons supérieurs auxquels est respectivement raccordée une console de force à ressort et qui débouchent dans des colonnes A latérales reliées vers le bas à des seuils longitudinaux latéraux de l'habitacle, **caractérisée en ce qu'**aux deux côtés du véhicule respectivement un dispositif de poutres d'assemblage (8, 8a) est prévu qui s'étend entre le longeron supérieur (4, 4a) et le seuil longitudinal (7, 7a) latéral associé et/ou la colonne A (6, 6a) associée en biais vers le bas - dans le sens de la hauteur du véhicule - ainsi que vers l'arrière - dans le sens de la longueur du véhicule -, chacun des dispositifs de poutres d'assemblage (8, 8a) étant formé par un profilé de tôle d'un seul tenant qui est fixé à l'aide de brides de jonction (9, 10) d'une part au longeron supérieur (4a) et d'autre part à la zone de jonction entre la colonne A (6a) et le seuil longitudinal (7a).

2. Carrosserie brute selon la revendication 1, **caractérisée en ce que** le dispositif de poutres d'assemblage (8, 8a) se termine, au niveau de sa zone terminale inférieure, sur une face frontale d'une zone de jonction entre la colonne A (6, 6a) et le seuil longitudinal (7, 7a).

3. Carrosserie brute selon la revendication 1 ou 2, **caractérisée en ce que** le profilé de tôle présente une section transversale en forme de U.
